# FASCICULE DE BREVET EUROPEEN

(11) **EP 0 740 388 B1**
(45) Date de publication et mention de la délivrance du brevet: **31.10.2001**
(21) Numéro de dépôt: 96410038.2
(22) Date de dépôt: 24.04.1996
(51) Int. Cl.: H02J 7/00

(54) **Chargeur de batterie modulaire**
Modulares Ladegerät
Modular battery charger

(30) Priorité: 28.04.1995 FR 9505366
(43) Date de publication de la demande: 30.10.1996
(73) Titulaire: ENERTRONIC S.A., 69200 Venissieux (FR)
(72) Inventeur: Pierre, Thierry, 38080 L'isle d'Abeau (FR); Milly, Roger, 38290 La Verpillere (FR)
(74) Mandataire: de Beaumont, Michel

(56) Documents cités:
- EP-A- 0 573 832
- DE-A- 2 132 387
- FR-A- 2 408 241
- GB-A- 2 031 168
- US-A- 3 305 754
- US-A- 4 331 911
- US-A- 4 777 406
- US-A- 4 791 347
- INTERNATIONAL TELECOMMUNICATIONS ENERGY CONFERENCE. (INTELEC), PARIS, SEPT. 27 - 30, 1993, vol. 2, 27 Septembre 1993, SOCIETE DES ELECTRICIENS ET DES ELECTRONICIENS, pages 146-151, XP000496211 SCHMIDT H ET AL: "THE CHARGE EQUALIZER A NEW SYSTEM TO EXTEND BATTERY LIFETIME IN PHOTOVOLTAIC SYSTEMS, U.P.S. AND ELECTRIC VEHICLES"

## Description

La présente invention concerne un chargeur de batterie, notamment d'une batterie constituée de plusieurs éléments indépendants connectés en série.

Pour charger une batterie constituée de plusieurs éléments connectés en série, la solution la moins coûteuse consiste à alimenter l'ensemble des éléments par un unique chargeur de forte puissance. Il en résulte que tous les éléments de la batterie sont traversés par un même courant.

Cette solution est loin d'être optimale. En effet, les éléments d'une batterie ont généralement des caractéristiques différentes, comme par exemple la capacité, la résistance interne, la tension nominale... En conséquence, même si tous les éléments sont à un même état de charge au début d'une phase de charge, la dispersion des caractéristiques provoque que certains éléments atteindront un état de charge complète tandis que d'autres éléments seront à un état de charge intermédiaire. Ainsi, les éléments qui auront fini de se charger seront soumis à une surcharge en attendant que le dernier élément atteigne son état de charge complète. De telles surcharges des éléments peuvent réduire leur durée de vie.

La demande de brevet français 2 408 241 propose une solution pour éviter cet inconvénient. Elle consiste à utiliser un chargeur "modulaire" qui comporte autant de chargeurs individuels que d'éléments de batterie. Un tel chargeur modulaire nécessite un grand nombre de conducteurs, au moins un pour chaque borne des éléments, ce qui multiplie le nombre de manipulations et les risques d'erreur lors du remplacement d'éléments défectueux.

Un objet de la présente invention est de prévoir une installation de charge de batterie à chargeur modulaire, dans laquelle il est particulièrement aisé de remplacer un élément défectueux.

Cet objet est atteint grâce à une installation de charge d'une batterie constituée de plusieurs éléments amovibles connectés en série, comprenant un régulateur à découpage individuel associé à chaque élément, caractérisée en ce que chaque régulateur individuel est fixé sur l'élément associé.

Selon un mode de réalisation de l'invention, chaque régulateur individuel est couplé par un enroulement secondaire à un enroulement primaire d'un régulateur à découpage commun à tous les éléments, et comprend un circuit magnétique sur lequel est enroulé l'enroulement secondaire du régulateur individuel, l'enroulement primaire comportant une ou plusieurs spires qui traversent tous les circuits magnétiques.

Selon un mode de réalisation de l'invention, chaque circuit magnétique est ouvrable de manière à permettre l'insertion et le retrait de la ou des spires de l'enroulement primaire.

Selon un mode de réalisation de l'invention, les régulateurs individuels sont fixés directement sur des cosses d'alimentation des éléments.

Selon un mode de réalisation de l'invention, les régulateurs individuels sont fixés par enclenchement sur les cosses.

Selon un mode de réalisation de l'invention, chaque régulateur individuel est prévu pour mesurer la température de l'élément associé.

Selon un mode de réalisation de l'invention, les régulations des régulateurs individuels sont indépendantes les unes des autres et de celles du régulateur commun qui est effectuée en courant.

Selon un mode de réalisation de l'invention, l'installation comprend un transformateur d'isolation disposé entre le régulateur commun et l'enroulement primaire.

Selon un mode de réalisation de l'invention, chaque régulateur individuel est intégré dans l'élément associé.

Ces objets, caractéristiques et avantages ainsi que d'autres de la présente invention apparaîtront en détail dans la description suivante de modes de réalisation particuliers, faite à titre non-limitatif à l'aide des figures jointes, parmi lesquelles :
la figure 1 représente schématiquement un premier mode de réalisation de chargeur modulaire utilisable dans une installation de charge de batterie selon la présente invention ;
la figure 2 représente schématiquement un deuxième mode de réalisation de chargeur modulaire utilisable dans une installation de charge de batterie selon la présente invention ; et
la figure 3 représente une vue en perspective schématique d'un mode de réalisation d'installation de charge de batterie selon l'invention.

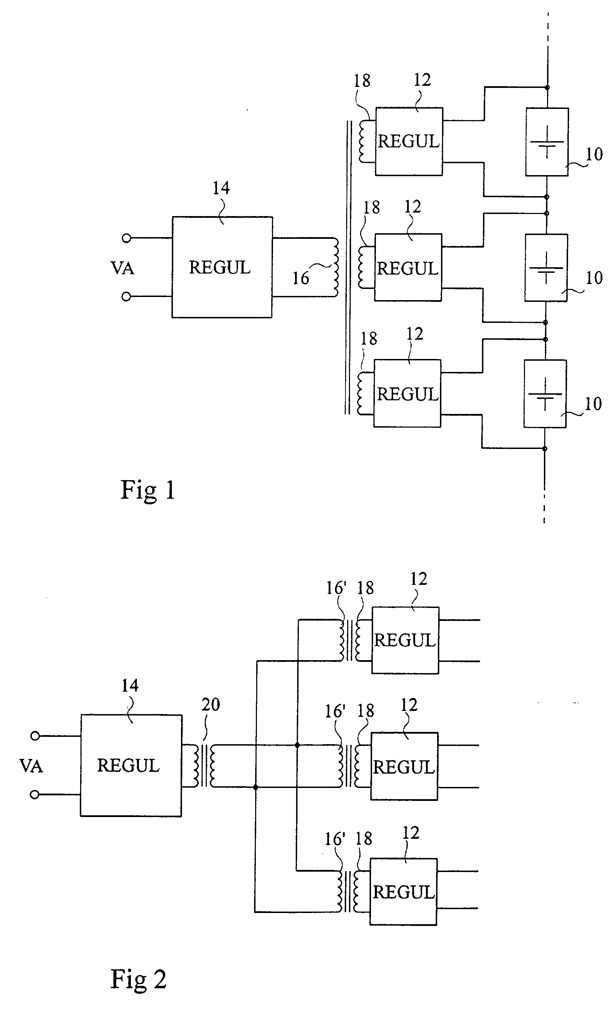

La figure 1 représente plusieurs éléments de batterie 10 connectés en série. Chacun de ces éléments 10 est associé à un chargeur individuel 12, qui n'est autre qu'un régulateur à découpage.

De préférence, les régulateurs à découpage 12 sont des régulateurs fonctionnant à basse tension et alimentés à partir d'un régulateur à découpage commun 14 fonctionnant à haute tension, comme par exemple la tension du secteur VA.

Dans le mode de réalisation de la figure 1, le régulateur commun 14 alimente un enroulement primaire 16 qui est couplé à des enroulements secondaires 18 associés respectivement aux régulateurs individuels 12.

Le régulateur commun 14 est prévu pour fournir à l'enroulement primaire 16 la puissance maximale disponible sur le secteur. Pour cela, il régule son courant d'entrée à une valeur constante légèrement inférieure au courant maximal que l'on peut soutirer du secteur. Si cette puissance maximale n'est pas consommée par l'ensemble des régulateurs individuels 12, le régulateur commun 14 agit naturellement en augmentant la tension aux bornes de l'enroulement primaire 16 de manière à tenter de compenser la diminution du courant d'entrée. La tension au primaire 16 n'exèdera toutefois pas la tension crête du secteur.

Les régulateurs individuels 12 agissent indépendamment les uns des autres et chacun applique un "programme" de charge de l'élément 10 qui lui. est associé. Un tel programme est classiquement, pour des batteries au plomb, une charge en trois phases, dite de type I-U-I. Lors de la première phase, on fournit à l'élément autant de courant que possible. Lorsque la tension de l'élément atteint pratiquement sa tension nominale, la tension de charge est fixée, ce qui entraîne normalement une diminution progressive du courant de charge. Lorsque le courant atteint une valeur limite inférieure, l'élément est chargé sous un courant constant faible jusqu'au moment où la batterie est utilisée.

Il y a autant de régulateurs individuels 12 que d'éléments de batterie 10 à charger, mais chacun des régulateurs 12 est un régulateur de faible puissance fonctionnant à basse tension, qui peut donc être réalisé à faible prix dans un faible encombrement. Par contre, il y a un seul régulateur 14 de forte puissance fonctionnant à haute tension. Il est nettement moins coûteux de réaliser un tel régulateur que plusieurs régulateurs de moindre puissance fonctionnant à haute tension.

La puissance disponible au primaire 16 est transmissible à tout instant, par couplage, à chacun des régulateurs individuels 12. Il en résulte que la puissance du primaire 16 est répartie entre les régulateurs 12 selon leur demande et qu'elle s'établit à la somme des puissances demandées par les régulateurs 12.

Lorsque les éléments 10 sont entièrement déchargés, chaque régulateur individuel 12 demande une puissance maximale. Le primaire 16 reçoit alors la puissance disponible sur le secteur et répartit celle-ci régulièrement entre les régulateurs 12.

Lorsque certains régulateurs 12 demandent une puissance décroissante, parce que leurs éléments atteignent un état de charge avancé, les régulateurs 12 qui demandent encore une puissance maximale voient leur puissance augmenter, de manière que la somme des puissances demandées soit égale à la puissance maximale diponible au primaire 16. Ceci augmente la vitesse de charge des éléments qui mettent le plus de temps à se charger, cette vitesse croissant au fur et à mesure que les éléments 10 atteignent un état de charge avancé.

A l'aide de cette configuration, on obtient donc une distribution de puissance optimale, c'est-à-dire permettant la charge la plus rapide possible de tous les éléments de la batterie, à partir de la puissance du secteur.

La figure 2 représente un deuxième mode de réalisation de chargeur modulaire. Des mêmes éléments qu'à la figure 1 sont désignés par des mêmes références. Les enroulements secondaires 18 des régulateurs 12, au lieu d'être alimentés par un enroulement primaire commun 16, sont alimentés par des enroulements primaires individuels 16' reliés en parallèle au régulateur commun 14.

Selon une variante, les enroulements primaires 16' (ou l'enroulement primaire 16 de la figure 1) sont alimentés par l'intermédiaire d'un transformateur d'isolation galvanique 20.

En effet, les conducteurs qui alimentent les enroulements 16' peuvent s'étendre sur une longueur importante dans un environnement où ils peuvent être manipulés par des personnes, ce qui nécessite leur isolation de la tension du secteur et éventuellement l'abaissement, grâce au transformateur 20, de leur tension.

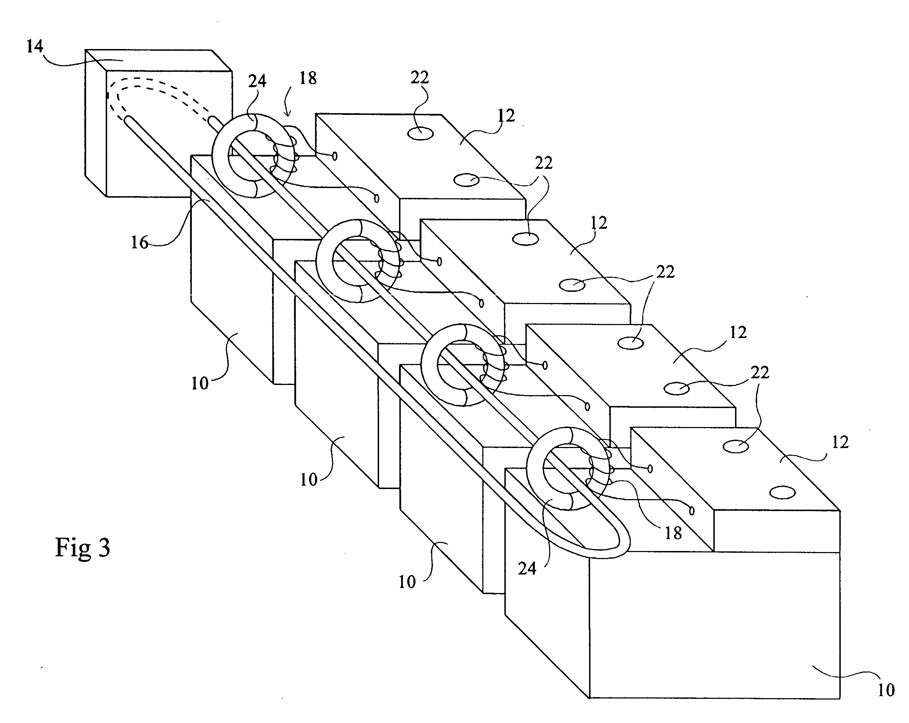

La figure 3 représente une vue en perspective schématique d'un mode de réalisation d'installation de charge de batterie selon l'invention. Chacun des régulateurs 12 est inclus dans un boîtier plat qui est fixé directement sur les cosses de sortie 22 des éléments de batterie 10. Chacun des enroulements secondaires 18 est enroulé sur un tore magnétique 24. Un enroulement primaire commun 16 comporte des spires qui passent dans les tores 24 et se referment en dehors des tores. Bien entendu, les tores 24 sont solidaires des boîtiers des régulateurs 12, ce qui n'est pas représenté pour des raisons de clarté.

Avec cette configuration, le retrait ou l'ajout d'un élément s'effectue par un simple démontage ou montage, sans risque d'erreur, du boîtier du régulateur 12 associé. Ces opérations sont simplifiées en prévoyant une fixation par enclenchement des régulateurs 12 sur les cosses 22.

De préférence, comme cela est représenté, chacun des tores 24 est constitué de deux moitiés, dont celle qui ne comporte pas l'enroulement secondaire 18 est amovible. Ceci rend encore plus aisé le retrait ou l'ajout d'un élément 10 muni de son régulateur 12.

Un avantage du contact direct obtenu entre les régulateurs 12 et les éléments 10 est que chaque régulateur 12 peut surveiller des paramètres de son élément 10, tels que la température. La température pourra être mesurée par une simple mesure ambiante ou, de préférence, par contact sur la surface supérieure de l'élément. La température est un paramètre important pour connaître le bon état d'un élément de batterie. En effet, le fait que cette température dépasse une valeur limite alors que le courant de charge qui est fourni à l'élément n'est pas anormalement élevé, indique de manière fiable que l'élément est défectueux. En outre, la mesure de la température peut être utilisée pour ajuster le courant de charge de l'élément.

Le coût relativement faible des régulateurs 12 pourra permettre leur intégration dans les éléments de batterie, ce qui facilitera notablement leur remplacement dans l'installation. En effet, il suffira pour cela d'ouvrir le tore 24 dont la moitié amovible est, par exemple, munie d'une charnière et d'un système à enclenchement. En outre, la température mesurée est alors plus précise car on mesure directement la température interne.

Les régulateurs 12 et 14 sont des régulateurs à découpage classiques bien connus de la technique. De préférence, dans une installation du type de la figure 3, le régulateur 14 fonctionne à une fréquence élevée, de l'ordre de plusieurs dizaines de kHz, afin d'augmenter l'effet de couplage entre le primaire 16 et les secondaires 18.

## Revendications

1. Installation de charge d'une batterie constituée de plusieurs éléments amovibles (10) connectés en série, comprenant un régulateur à découpage individuel (12) associé à chaque élément (10), **caractérisée en ce que** chaque régulateur individuel (12) est fixé sur l'élément (10) associé.

2. Installation de charge d'une batterie selon la revendication 1, **caractérisée en ce que** chaque régulateur individuel (12) est couplé par un enroulement secondaire (18) à un enroulement primaire (16) d'un régulateur à découpage (14) commun à tous les éléments (10), et comprend un circuit magnétique (24) sur lequel est enroulé l'enroulement secondaire (18) du régulateur individuel, l'enroulement primaire (16) comportant une ou plusieurs spires qui traversent tous les circuits magnétiques.

3. Installation de charge d'une batterie selon la revendication 2, **caractérisée en ce que** chaque circuit magnétique (24) est ouvrable de manière à permettre l'insertion et le retrait de la ou les spires de l'enroulement primaire (16).

4. Installation de charge d'une batterie selon la revendication 1, **caractérisée en ce que** les régulateurs individuels (12) sont fixés directement sur des cosses d'alimentation (22) des éléments.

5. Installation de charge d'une batterie selon la revendication 4, **caractérisée en ce que** les régulateurs individuels (12) sont fixés par enclenchement sur les cosses (22).

6. Installation de charge d'une batterie selon la revendication 1, **caractérisée en ce que** chaque régulateur individuel (12) est prévu pour mesurer la température de l'élément (10) associé.

7. Installation de charge d'une batterie selon la revendication 2, **caractérisée en ce que** les régulations des régulateurs individuels (12) sont indépendantes les unes des autres et de celles du régulateur commun (14) qui est effectuée en courant.

8. Installation de charge d'une batterie selon la revendication 1, **caractérisée en ce qu'**elle comprend un transformateur d'isolation (20) disposé entre le régulateur commun (14) et l'enroulement primaire (16).

9. Installation de charge d'une batterie selon la revendication 2, **caractérisée en ce que** chaque régulateur individuel est intégré dans l'élément (10) associé.

## Claims

1. An installation for charging a battery formed of several series-connected removable elements (10), including an individual switched-mode regulator (12) associated with each element (10), **characterized in that** each individual regulator (12) is attached on the associated element (10).

2. The battery charge installation of claim 1, **characterized in that** each individual regulator (12) is coupled by a secondary winding (18) to a primary winding (16) of a switched-mode regulator (14) common to all elements (10), and includes a magnetic circuit (24) on which is wound the secondary winding (18) of the individual regulator, the primary winding (16) including one or several spirals which cross all the magnetic circuits.

3. The battery charge installation of claim 2, **characterized in that** each magnetic circuit (24) can be turned off to enable insertion and retrieval of the spiral(s) of the primary winding (16).

4. The battery charge installation of claim 1, **characterized in that** the individual regulators (12) are directly attached on lead connections (22) for supplying the elements.

5. The battery charge installation of claim 4, **characterized in that** the individual-regulators (12) are attached by interlocking on the lead connections (22).

6. The battery charge installation of claim 1, **characterized in that** each individual regulator (12) is provided to measure the temperature of the associated element (10).

7. The battery charge installation of claim 2, **characterized in that** the regulations of the individual regulators (12) are independent from one another and from that of the common regulator (14) which is performed by a current.

8. The battery charge installation of claim 1, **characterized in that** it includes an isolation transformer (20) arranged between the common regulator (14) and the primary winding (16).

9. The battery charge installation of claim 2, **characterized in that** each individual regulator is integrated in the associated element (10).

## Patentansprüche

1. Vorrichtung zum Laden einer aus mehreren in Reihe geschalteten, trennbaren Elementen (10) bestehenden Batterie, wobei die Vorrichtung jeweils jedem Element (10) zugeordnet einen individuellen Umschalt- bzw. Anschnitt-Regler (12) umfaßt, **dadurch gekennzeichnet daß** jeder individuelle Regler (12) jeweils auf seinem zugeordneten Element (10) befestigt ist.

2. Batterie-Ladevorrichtung nach Anspruch 1, **dadurch gekennzeichnet, daß** jeweils jeder individuelle Regler (12) über eine Sekundärwicklung (18) mit einer Primärwicklung (16) eines sämtlichen Elementen (10) gemeinsamen Umschalt- bzw. Anschnitt-Reglers (14) gekoppelt ist und einen magnetischen Kreis (24) aufweist, auf welchen die Sekundärwicklung (18) des individuellen Reglers gewickelt ist, und daß die Primärwicklung (16) eine oder mehrere Windungen aufweist, welche sämtliche Magnetkreise durchsetzt.

3. Batterie-Ladevorrichtung nach Anspruch 2, daß jeweils jeder magnetische Kreis (24) geöffnet werden kann, derart, daß die Windung bzw. Windungen der Primärwicklung (16) eingeführt und entnommen werden kann,

4. Batterie-Ladevorrichtung nach Anspruch 1, **dadurch gekennzeichnet, daß** die individuellen Regler (12) direkt auf Speise-Anschlußklemmen (22) der Elemente befestigt sind.

5. Batterie-Ladevorrichtung nach Anspruch 4, **dadurch gekennzeichnet, daß** die individuellen Regler (12) mittels Einklinken auf den Speiseanschlußklemmen (22) befestigt sind.

6. Batterie-Ladevorrichtung nach Anspruch 1, **dadurch gekennzeichnet, daß** jeder individuelle Regler (12) jeweils zum Messen der Temperatur des zugeordneten Elements (10) vorgesehen ist.

7. Batterie-Ladevorrichtung nach Anspruch 2, **dadurch gekennzeichnet daß** die Regelvorgänge der individuellen Regler (12) unabhängig voneinander und von denen des gemeinsamen Reglers (14) sind, der laufend betätigt wird.

8. Batterie-Ladevorrichtung nach Anspruch 1, **dadurch gekennzeichnet, daß** sie einen zwischen dem gemeinsamen Regler (14) und der Primärwicklung (16) liegenden Trenn-bzw. Isolationstransformator (20) aufweist.

9. Batterie-Ladevorrichtung nach Anspruch 2, **dadurch gekennzeichnet, daß** jeder individuelle Regler jeweils in das zugeordnete Element (10) integriert ist.
